(19) Europäisches Patentamt
European Patent Office
Office européen des brevets

(11) EP 4 350 829 A1

# (12) EUROPEAN PATENT APPLICATION
published in accordance with Art. 153(4) EPC

(43) Date of publication:
**10.04.2024 Bulletin 2024/15**

(21) Application number: **22815974.5**

(22) Date of filing: **26.05.2022**

(51) International Patent Classification (IPC):
***H01M 10/052** (2010.01)* ***H01M 10/0567** (2010.01)*
***H01M 10/058** (2010.01)*

(52) Cooperative Patent Classification (CPC):
**H01M 10/052; H01M 10/0567; H01M 10/058;**
Y02E 60/10

(86) International application number:
**PCT/JP2022/021609**

(87) International publication number:
**WO 2022/255224 (08.12.2022 Gazette 2022/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2021 JP 2021094572**

(71) Applicant: **Mitsui Chemicals, Inc.**
**Tokyo 104-0028 (JP)**

(72) Inventors:
- **MIZUNO, Yu**
  **Sodegaura-shi, Chiba 299-0265 (JP)**
- **SUGIHARA, Yuri**
  **Sodegaura-shi, Chiba 299-0265 (JP)**

(74) Representative: **J A Kemp LLP**
**80 Turnmill Street**
**London EC1M 5QU (GB)**

Remarks:
A request for correction of the description has been filed pursuant to Rule 139 EPC. A decision on the request will be taken during the proceedings before the examining division (Guidelines for Examination in the EPO, A-V, 3).

## (54) NON-AQUEOUS ELECTROLYTE FOR BATTERY, LITHIUM SECONDARY BATTERY PRECURSOR, METHOD FOR MANUFACTURING LITHIUM SECONDARY BATTERY, AND LITHIUM SECONDARY BATTERY

(57) A non-aqueous electrolytic solution for a battery includes a compound represented by Formula (P) and a sulfuric ester compound. In Formula (P), each of $R^1$ to $R^4$ independently represents an alkyl group having from 1 to 6 carbon atoms or an aryl group having from 6 to 12 carbon atoms, $L^1$ represents an alkylene group having from 1 to 6 carbon atoms or an arylene group having from 6 to 12 carbon atoms, and n represents an integer from 0 to 2. In a case in which n is 2, two $R^4$s may be the same as or different from each other, and two $L^1$s may be the same as or different from each other.

EP 4 350 829 A1

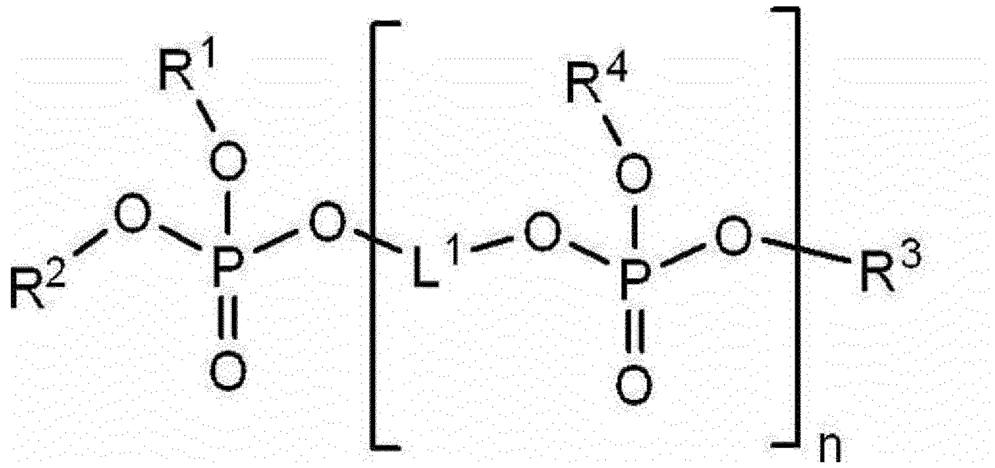

(P)

FIG.1

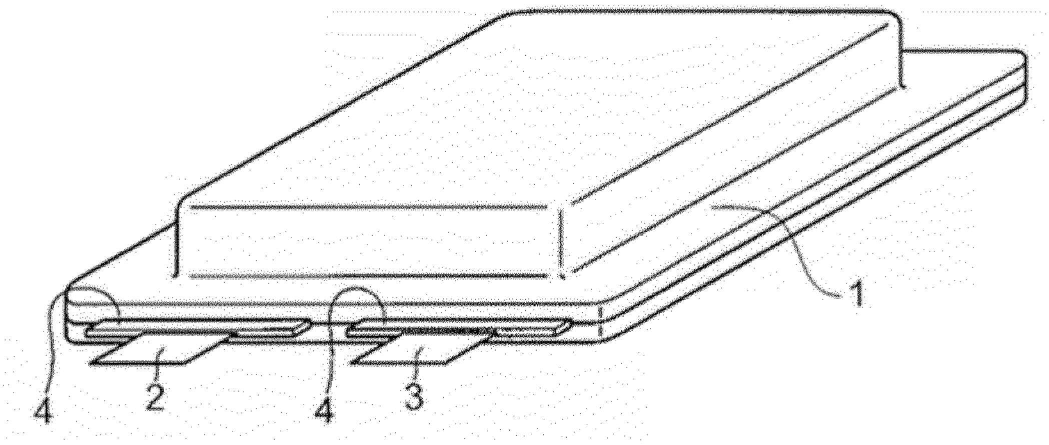

## Description

Technical Field

The present disclosure relates to a non-aqueous electrolytic solution for a battery, a lithium secondary battery precursor, a method for producing a lithium secondary battery, and a lithium secondary battery.

Background Art

Various studies have been made with respect to non-aqueous electrolytic solutions for batteries, and batteries (for example, lithium secondary batteries) using such non-aqueous electrolytic solutions.

For example, Patent Document 1 discloses a non-aqueous electrolytic solution secondary battery including a positive electrode containing a lithium transition metal complex oxide, a negative electrode capable of inserting and releasing lithium ions, and a non-aqueous electrolytic solution, wherein, in the non-aqueous electrolytic solution, from 20 to 40% by volume of the solvent is tributyl phosphate (TBP) or triphenyl phosphate (TPP). Patent Document 1 discloses the non-aqueous electrolytic solution secondary battery as a non-aqueous electrolytic solution secondary battery that has excellent high temperature charge-discharge cycle characteristics and in which a flame-retarding effect is sufficiently exerted.

Patent Document 2 discloses a non-aqueous electrolytic solution for a non-aqueous electrolytic solution battery including a positive electrode and a negative electrode which can absorb and release metal ions, wherein the non-aqueous electrolytic solution includes, in addition to an electrolyte and a non-aqueous solvent, a specific phosphoric ester compound at from 0.001% by mass to 4.5% by mass relative to the total amount of the non-aqueous electrolytic solution. Patent Document 2 discloses such a non-aqueous electrolytic solution as a non-aqueous electrolytic solution that exhibits less gas generation during storage at high temperatures.

Patent Document 3 discloses a non-aqueous electrolytic solution for a battery that includes phosphoric acid, as a non-aqueous electrolytic solution for a battery capable of curbing an increase in the battery resistance after storage at high temperatures.

Patent Document 1: Japanese Patent Application Laid-open (JP-A) No. 2001-307768
Patent Document 2: Japanese Patent Application Laid-open (JP-A) No. 2009-3799
Patent Document 3: Japanese Patent Application Laid-open (JP-A) No. 2018-156761

SUMMARY OF INVENTION

<Problem to be Solved by Invention>

There are cases in which it is requested that deterioration in the performance of a battery be curbed and that a heat generation rate at the time of short-circuit be reduced, with respect to a battery such as a lithium secondary battery.

A problem that one aspect of the present disclosure addresses is to provide a non-aqueous electrolytic solution for a battery, a lithium secondary battery precursor, and a method of producing a lithium secondary battery that can reduce the heat generation rate at the time of short-circuit while curbing deterioration of the performance of the battery, and to provide a lithium secondary battery in which deterioration of the performance of the battery is curbed and the heat generation rate at the time of short-circuit is reduced.

<Means for Solving the Problem>

Means for solving the above problem include the following aspects.

<1> A non-aqueous electrolytic solution for a battery, including a compound represented by the following Formula (P) and a sulfuric ester compound:

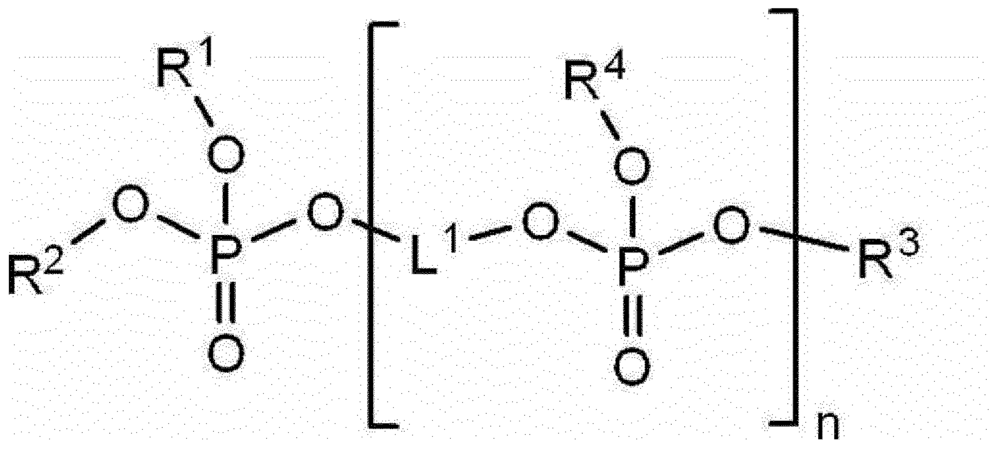

(P)

In Formula (P), each of $R^1$ to $R^4$ independently represents an alkyl group having from 1 to 6 carbon atoms or an aryl group having from 6 to 12 carbon atoms, $L^1$ represents an alkylene group having from 1 to 6 carbon atoms or an arylene group having from 6 to 12 carbon atoms, and n represents an integer from 0 to 2. In a case in which n is 2, two $R^4$s may be the same as or different from each other, and two $L^1$s may be the same as or different from each other.

<2> The non-aqueous electrolytic solution for a battery according to <1>, wherein the compound represented by Formula (P) includes at least one selected from the group consisting of compound (P-1), compound (P-2), compound (P-3), and compound (P-4) shown below:

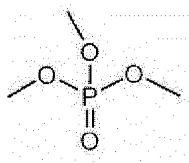

(P-1)

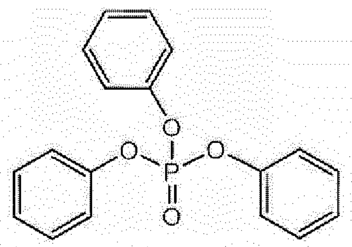

(P-2)

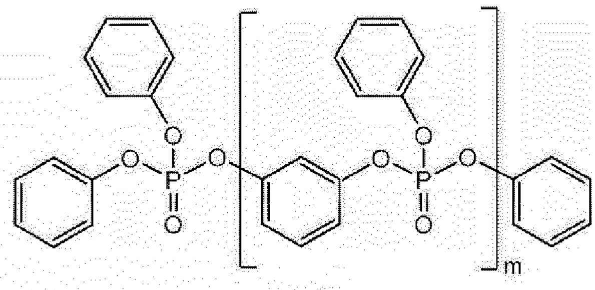

(P-3)

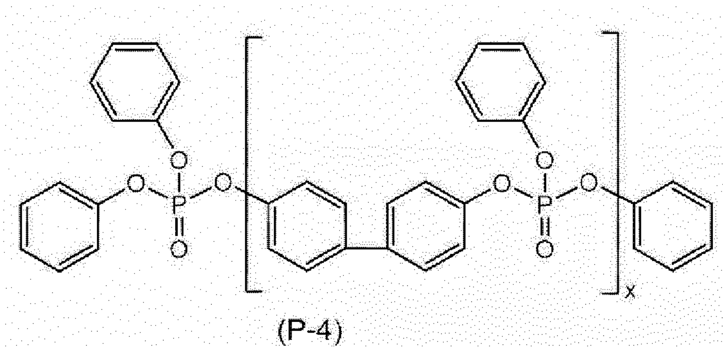

(P-4)

In compound (P-3), m represents an integer of 1 or 2. In Formula (P-4), x represents 1 or 2.

<3> The non-aqueous electrolytic solution for a battery according to <1> or <2>, wherein the sulfuric ester compound includes a cyclic sulfuric ester compound.

<4> The non-aqueous electrolytic solution for a battery according to any one of <1> to <3>, wherein the sulfuric ester compound includes a compound represented by the following Formula (C):

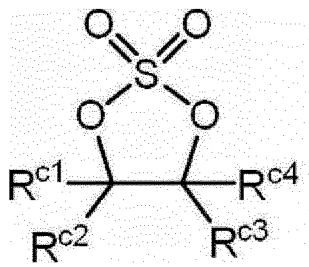
(C)
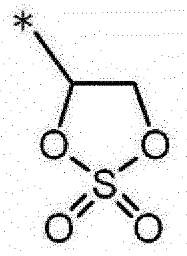
(a)
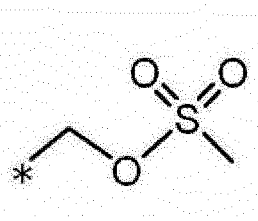
(b)

In Formula (C), each of $R^{c1}$ to $R^{c4}$ independently represents a hydrogen atom, a hydrocarbon group having from 1 to 6 carbon atoms, a group represented by Formula (a), or a group represented by Formula (b). In Formulae (a) and (b), * represents the bonding position.

<5> The non-aqueous electrolytic solution for a battery according to <4>, wherein the compound represented by Formula (C) includes at least one selected from the group consisting of the following compound (C-1) and the following compound (C-4).

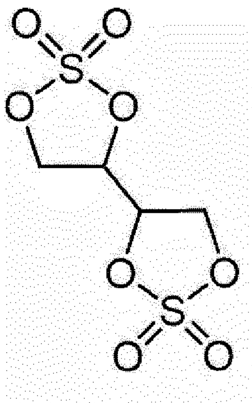
(C-1)
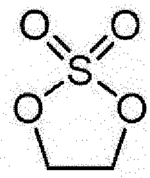
(C-4)

<6> The non-aqueous electrolytic solution for a battery according to any one of <1> to <5>, wherein the number ratio [sulfuric acid groups / phosphoric acid groups] of the number of sulfuric acid groups contained in the total amount of the sulfuric ester compound to the number of phosphoric acid groups contained in the total amount of the compound represented by Formula (P) is from more than 0 to 3.00.
<7> The non-aqueous electrolytic solution for a battery according to any one of <1> to <6>, wherein the content of the compound represented by Formula (P) is from 0.1% by mass to 1.0% by mass with respect to the total amount of the non-aqueous electrolytic solution for a battery.
<8> The non-aqueous electrolytic solution for a battery according to any one of <1> to <7>, further including a cyclic carbonate ester compound containing a carbon-carbon unsaturated bond.
<9> A lithium secondary battery precursor, including:

a positive electrode;
a negative electrode; and
the non-aqueous electrolytic solution for a battery of any one of <1> to <8>.

<10> A method of producing a lithium secondary battery, the method including the steps of:

providing the lithium secondary battery precursor of <9>; and
charging and discharging the lithium secondary battery precursor, to obtain a lithium secondary battery.

<11> A lithium secondary battery obtained by charging and discharging the lithium secondary battery precursor of <9>.

<Effect of Invention>

According to an aspect of the present disclosure, a non-aqueous electrolytic solution for a battery, a lithium secondary battery precursor, and a method of producing a lithium secondary battery that can reduce the heat generation rate at the time of short-circuit while curbing deterioration of the performance of the battery, and a lithium secondary battery in which deterioration of the performance of the battery is curbed and the heat generation rate at the time of short-circuit is reduced, are provided.

BRIEF DESCRIPTION OF THE DRAWINGS

Fig. 1 is a schematic perspective view illustrating one example of a laminated battery, which is an example of the lithium secondary battery precursor according to the present disclosure or of the lithium secondary battery according to the present disclosure.

Fig. 2 is a schematic cross-sectional view in the thickness direction of layered electrodes housed in the laminated battery illustrated in Fig. 1.

Fig. 3 is a schematic cross-sectional view illustrating one example of a coin battery, which is another example of the lithium secondary battery precursor according to the present disclosure or the lithium secondary battery according to the present disclosure.

MODES FOR CARRYING OUT THE INVENTION

In the present specification, any numerical range indicated using "to" denotes a range including numerical values noted before and after "to" as the lower limit value and the upper limit value.

In a case in which plural substances corresponding to a component of interest are present in a composition, the amount of the component in the composition described in the present specification means the total amount of the plural substances present in the composition, unless otherwise specified.

In the present specification, the term "step" encompasses not only an independent step, but also encompasses a step that cannot be clearly distinguished from other steps, as long as the intended purpose of the step is achieved.

[Non-Aqueous Electrolytic Solution for Battery]

The non-aqueous electrolytic solution for a battery according to the present disclosure (hereinafter also simply referred to as the "non-aqueous electrolytic solution") includes a compound represented by the following Formula (P) and a sulfuric ester compound.

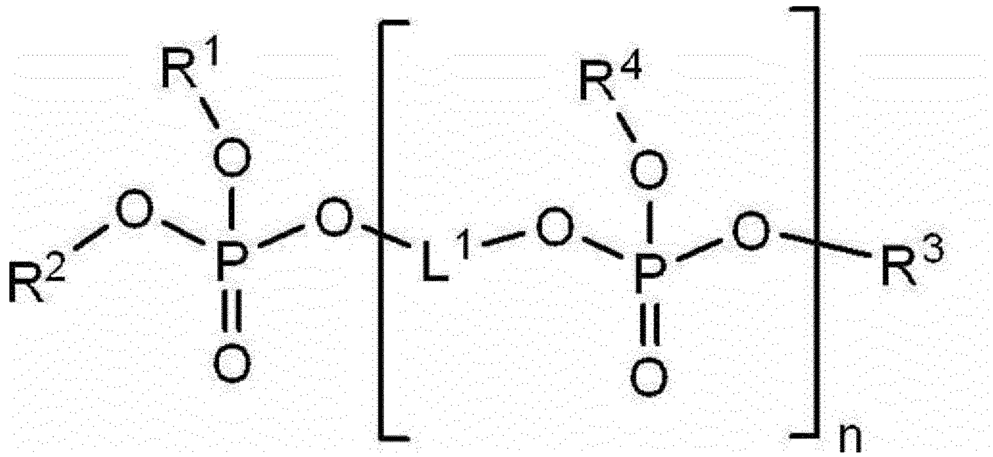

(P)

In Formula (P), each of $R^1$ to $R^4$ independently represents an alkyl group having from 1 to 6 carbon atoms or an aryl group having from 6 to 12 carbon atoms, $L^1$ represents an alkylene group having from 1 to 6 carbon atoms or an arylene group having from 6 to 12 carbon atoms, and n represents an integer from 0 to 2. In a case in which n is 2, two $R^4$s may be the same as or different from each other, and two $L^1$s may be the same as or different from each other.

A study conducted by the present inventors has revealed that:

(1) the heat generation rate at the time of battery short-circuit is reduced by including a compound represented by Formula (P) in a non-aqueous electrolytic solution;
(2) inclusion of a compound represented by Formula (P) in a non-aqueous electrolytic solution causes deterioration of the performance of the battery (for example, an increase in the battery resistance); and
(3) the heat generation rate at the time of short-circuit can be reduced while the deterioration of the performance of the battery is curbed, in a case in which a non-aqueous electrolytic solution includes a compound represented by Formula (P) and a sulfuric ester compound.

Therefore, according to the non-aqueous electrolytic solution according to the present disclosure, the heat generation rate at the time of short-circuit can be reduced while deterioration of the performance of the battery is curbed.
Further, according to the non-aqueous electrolytic solution according to the present disclosure, the heat generation rate at the time of short-circuit can further be reduced as compared to a case in which the non-aqueous electrolytic solution includes a compound represented by Formula (P) but does not include a sulfuric ester compound (for example, refer to the comparison between later-described Example 1-1 and Comparative Example 1-1). It is conceivable that such effects result from the combination of the compound represented by Formula (P) and the sulfuric ester compound.
The respective components that can be included in the non-aqueous electrolytic solution according to the present disclosure are described below.

<Compound Represented by Formula (P)>

The non-aqueous electrolytic solution according to the present disclosure includes at least one compound represented by Formula (P). The compound represented by Formula (P) belongs to a phosphoric ester compound, as is understood from the following structure.

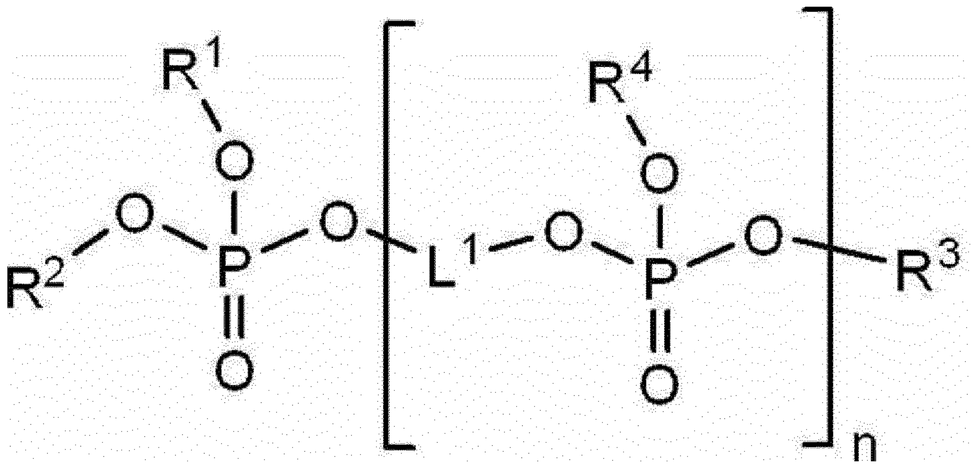

(P)

In Formula (P), each of $R^1$ to $R^4$ independently represents an alkyl group having from 1 to 6 carbon atoms or an aryl group having from 6 to 12 carbon atoms, $L^1$ represents an alkylene group having from 1 to 6 carbon atoms or an arylene group having from 6 to 12 carbon atoms, and n represents an integer from 0 to 2. In a case in which n is 2, two $R^4$s may be the same as or different from each other, and two $L^1$s may be the same as or different from each other.
In Formula (P), the alkyl group represented by any of $R^1$ to $R^4$ may be a linear alkyl group or a branched alkyl group. The number of carbon atoms in the alkyl group represented by any of $R^1$ to $R^4$ is from 1 to 6, preferably from 1 to 3, more preferably from 1 or 2, and still more preferably 1.
In Formula (P), the number of carbon atoms in the aryl group represented by any of $R^1$ to $R^4$ is from 6 to 12, preferably from 6 to 11, more preferably from 6 to 8, and still more preferably 6 or 7. The aryl group represented by any of $R^1$ to $R^4$ is preferably a phenyl group or a phenyl group substituted by at least one alkyl group (preferably a methyl group or an ethyl group, and more preferably a methyl group), and more preferably a phenyl group.
In Formula (P), each of $R^1$ to $R^4$ independently represents preferably an alkyl group having from 1 to 6 carbon atoms, more preferably an alkyl group having from 1 to 3 carbon atoms, still more preferably a methyl group or an ethyl group, and further preferably a methyl group.
In Formula (P), the alkylene group represented by $L^1$ may be a linear alkylene group or a branched alkylene group. The number of carbon atoms in the alkylene group represented by $L^1$ is from 1 to 6, preferably from 1 to 3, more preferably 1 or 2, and still more preferably 1.
In Formula (P), the number of carbon atoms in the arylene group represented by $L^1$ is from 6 to 12, preferably

from 6 to 11, more preferably from 6 to 8, and still more preferably 6 or 7. The arylene group represented by $L^1$ is preferably a phenylene group, a biphenylene group, a phenylene group substituted by at least one alkyl group (preferably a methyl group or an ethyl group, more preferably a methyl group), or a biphenylene group substituted by at least one alkyl group (preferably a methyl group or an ethyl group, more preferably a methyl group).

In Formula (P), $L_1$ is preferably an alkylene group having from 1 to 6 carbon atoms, more preferably an alkylene group having from 1 to 3 carbon atoms, still more preferably a methylene group or an ethylene group, and further more preferably a methylene group.

In Formula (P), n represents an integer from 0 to 2. In a case in which n is 2, the two $R^4$s may be the same as each other or different from each other, and the two $L^1$s may be the same as each other or different from each other. Specifically, n is preferably 0 or 1, and more preferably 0.

The compound represented by Formula (P) preferably includes at least one selected from the group consisting of the following compound (P-1), the following compound (P-2), the following compound (P-3), and the following compound (P-4).

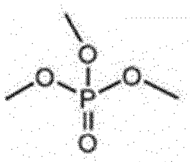

(P-1)

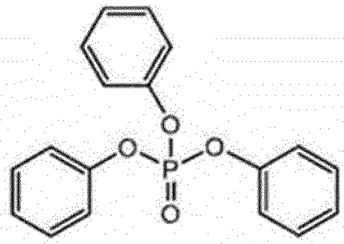

(P-2)

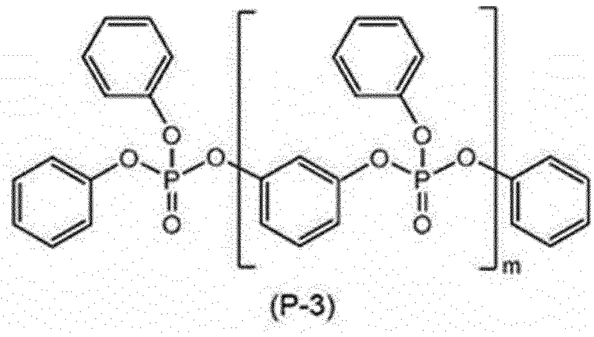

(P-3)

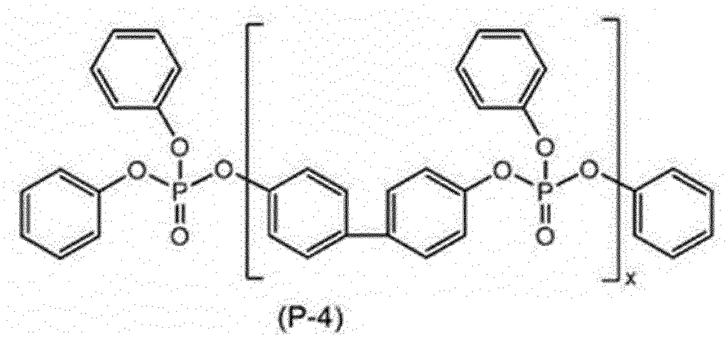

(P-4)

In compound (P-3), m represents 1 or 2. Compound (P-3) may be either a compound in which m is 1 or a compound in which m is 2, or both (i.e., a mixture). Compound (P-4) may be either a compound in which x is 1 or a compound in which x is 2, or both (i.e., a mixture).

The content of the compound represented by Formula (P) is preferably from 0.01% by mass to 10% by mass, more preferably from 0.02% by mass to 5.0% by mass, still more preferably from 0.05% by mass to 3.0% by mass, further more preferably from 0.05% by mass to 2.0% by mass, and still further more preferably from 0.1% by mass to 1.0% by mass, with respect to the total amount of the non-aqueous electrolytic solution.

In a case in which the compound represented by Formula (P) includes at least one selected from the group consisting of compound (P-1), compound (P-2), compound (P-3), and compound (P-4), the total content of compounds (P-1), (P-2), (P-3), and (P-4) is preferably from 50% by mass to 100% by mass, more preferably from 60% by mass to 100% by mass, and still more preferably from 80% by mass to 100% by mass, with respect to the total amount of compounds represented by Formula (P).

The above-described preferable ranges for the content of compound represented by Formula (P) may be applied as preferable ranges for the content of each of compound (P-1), compound (P-2), compound (P-3), and compound (P-4).

<Sulfuric Ester Compound>

The non-aqueous electrolytic solution according to the present disclosure includes at least one sulfuric ester

compound. The sulfuric ester compound may be a chain sulfuric ester compound or a cyclic sulfuric ester compound. The sulfuric ester compound is preferably a cyclic sulfuric ester compound from the viewpoint of more effectively producing the effect exerted by the non-aqueous electrolytic solution according to the present disclosure.

The sulfuric ester compound preferably includes a compound represented by the following Formula (C). The compound represented by Formula (C) is within the scope of a cyclic sulfuric ester compound, as is understood from the following structure.

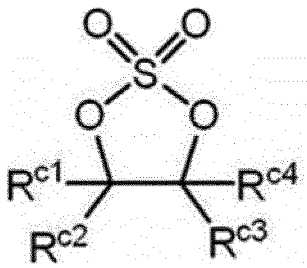
(C)
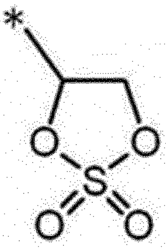
(a)
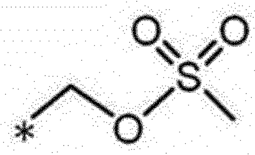
(b)

In Formula (C), each of $R^{c1}$ to $R^{c4}$ independently represents a hydrogen atom, a hydrocarbon group having from 1 to 6 carbon atoms, a group represented by Formula (a), or a group represented by Formula (b). In Formulae (a) and (b), * represents a bonding position.

In Formula (C), the hydrocarbon group having from 1 to 6 carbon atoms represented by any of $R^{c1}$ to $R^{c4}$ is preferably an alkyl group, an alkenyl group, or an alkynyl group, more preferably an alkyl group or an alkenyl group, and particularly preferably an alkyl group.

The number of carbon atoms in the hydrocarbon group having from 1 to 6 carbon atoms represented by any of $R^{c1}$ to $R^{c4}$ is preferably from 1 to 3, more preferably 1 or 2, and particularly preferably 1.

Specific examples of the compound represented by Formula (C) are shown below. However, compound (C) is not limited to the following specific examples.

The sulfuric ester compound preferably includes at least one selected from the group consisting of compound (C-1), compound (C-2), compound (C-3), and compound (C-4), preferably includes at least one selected from the group consisting of compound (C-1), compound (C-2), and compound (C-3), more preferably includes at least one selected from the group consisting of compound (C-1) and compound (C-2), and still more preferably includes compound (C-1).

It is also preferable that the sulfuric ester compound includes at least one selected from the group consisting of compound (C-1) and compound (C-4).

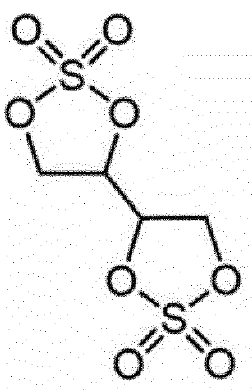
(C-1)
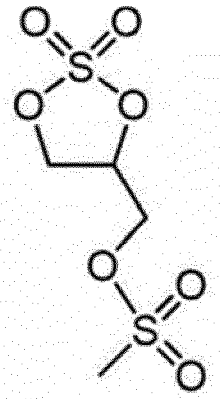
(C-2)
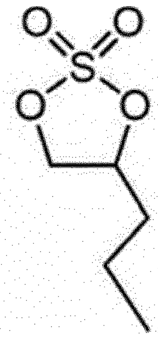
(C-3)
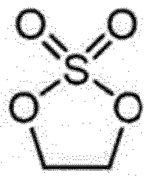
(C-4)

The content of the sulfuric ester compound is preferably from 0.001% by mass to 10% by mass, more preferably from 0.003% by mass to 5.0% by mass, still more preferably from 0.003% by mass to 3.0% by mass, further more preferably from 0.03% by mass to 3.0% by mass, still further more preferably from 0.1% by mass to 3.0% by mass, and further more preferably from 0.1% by mass to 2.0% by mass, with respect to the total amount of the non-aqueous electrolytic solution.

In a case in which the sulfuric ester compound includes a cyclic sulfuric ester compound (preferably a compound represented by Formula (C)), the proportion of the cyclic sulfuric ester compound (preferably a compound represented

by Formula (C)) to all sulfuric ester compounds is preferably from 50% by mass to 100% by mass, more preferably from 60% by mass to 100% by mass, and still more preferably from 80% by mass to 100% by mass.

The above-described preferable ranges for the content of sulfuric ester compound may be applied as preferable ranges for the content of cyclic sulfuric ester compound, may be applied as preferable ranges for the content of compound represented by Formula (C), and may be applied as preferable ranges for the content of each of compounds (C-1) to (C-4).

In the non-aqueous electrolytic solution according to the present disclosure, the number ratio [sulfuric acid groups/phosphoric acid groups], which is the ratio of the number of sulfuric acid groups contained in the total amount of sulfuric ester compounds to the number of phosphoric acid groups contained in the total amount of compounds represented by Formula (P) is preferably from more than 0 to 3.00.

In a case in which the number ratio [sulfuric acid groups/phosphoric acid groups] is more than 0 but not more than 3.00, the above-described effect exerted by the non-aqueous electrolytic solution according to the present disclosure is more effectively produced. The number ratio [sulfuric acid groups/phosphoric acid groups] is preferably from 0.10 to 2.50, and more preferably from 0.20 to 2.20.

<Electrolyte>

The non-aqueous electrolytic solution according to the present disclosure includes at least one electrolyte (preferably an electrolyte that is a lithium salt). Examples of the electrolyte that is a lithium salt include salts of inorganic acid anions such as lithium hexafluorophosphate ($LiPF_6$), lithium tetrafluoroborate ($LiBF_4$), lithium hexafluoroarsenate ($LiAsF_6$), lithium hexafluorotantalate ($LiTaF_6$), lithium perchlorate ($LiClO_4$), lithium tetrachloroaluminate ($LiAlCl_4$), and lithium decachlorodecaborate ($Li_2B_{10}Cl_{10}$); salts of organic acid anions such as lithium trifluoromethanesulfonate ($LiCF_3SO_3$), lithium bis(trifluoromethanesulfonyl)imide ($Li(CF_3SO_2)_2N$), lithium bis(fluorosulfonyl)imide ($Li(FSO_2)_2N$), and lithium bis(pentafluoroethanesulfonyl)imide ($Li(C_2F_5SO_2)_2N$); and the like.

$LiPF_6$ is a particularly preferable lithium salt.

The proportion of lithium salt to all electrolytes contained in the non-aqueous electrolytic solution according to the present disclosure is preferably from 50% by mass to 100% by mass, more preferably from 60% by mass to 100% by mass, and still more preferably from 80% by mass to 100% by mass.

The proportion of $LiPF_6$ to all electrolytes contained in the non-aqueous electrolytic solution according to the present disclosure is preferably from 50% by mass to 100% by mass, more preferably from 60% by mass to 100% by mass, and still more preferably from 80% by mass to 100% by mass.

The concentration of electrolytes in the non-aqueous electrolytic solution according to the present disclosure is preferably from 0.1 mol/L to 3 mol/L, and more preferably from 0.5 mol/L to 2 mol/L.

The concentration of $LiPF_6$ in the non-aqueous electrolytic solution according to the present disclosure is preferably from 0.1 mol/L to 3 mol/L, and more preferably from 0.5 mol/L to 2 mol/L.

<Non-aqueous Solvent>

The non-aqueous electrolytic solution according to the present disclosure includes at least one non-aqueous solvent. Examples of the non-aqueous solvent include cyclic carbonates, fluorine-containing cyclic carbonates, chain carbonates, fluorine-containing chain carbonates, aliphatic carboxylic acid esters, fluorine-containing aliphatic carboxylic acid esters, γ-lactones, fluorine-containing γ-lactones, cyclic ethers, fluorine-containing cyclic ethers, chain ethers, fluorine-containing chain ethers, nitriles, amides, lactams, nitromethane, nitroethane, sulfolane, trimethyl phosphate, dimethyl sulfoxide, dimethyl sulfoxide phosphate, and the like.

Examples of cyclic carbonates include ethylene carbonate (EC), propylene carbonate (PC), butylene carbonate (BC), and the like.

Examples of fluorine-containing cyclic carbonates include fluoroethylene carbonate (FEC) and the like.

Examples of chain carbonates include dimethyl carbonate (DMC), diethyl carbonate (DEC), ethyl methyl carbonate (EMC), methyl propyl carbonate (MPC), ethyl propyl carbonate (EPC), dipropyl carbonate (DPC), and the like.

Examples of aliphatic carboxylic acid esters include methyl formate, methyl acetate, methyl propionate, methyl butyrate, methyl isobutyrate, methyl trimethylbutyrate, ethyl formate, ethyl acetate, ethyl propionate, ethyl butyrate, ethyl isobutyrate, ethyl trimethylbutyrate, and the like.

Examples of γ-lactones include γ-butyrolactone, γ-valerolactone, and the like.

Examples of cyclic ethers include tetrahydrofuran, 2-methyltetrahydrofuran, tetrahydropyrane, 1,3-dioxolane, 4-methyl-1,3-dioxolane, 1,3-dioxane, 1,4-dioxane, and the like.

Examples of chain ethers include 1,2-ethoxyethane (DEE), ethoxymethoxyethane (EME), diethyl ether, 1,2-dimethoxyethane, 1,2-dibutoxyethane, and the like.

Examples of nitriles include acetonitrile, glutaronitrile, adiponitrile, methoxyacetonitrile, 3-methoxypropionitrile, and the like.

Examples of amides include N,N-dimethylformamide and the like.

Examples of lactams include N-methylpyrrolidinone, N-methyloxazolidinone, N,N'-dimethylimidazolidinone, and the like.

The non-aqueous solvent preferably includes at least one selected from the group consisting of cyclic carbonates, fluorine-containing cyclic carbonates, chain carbonates, and fluorine-containing chain carbonates.

In this case, the total proportion of cyclic carbonates, fluorine-containing cyclic carbonates, chain carbonates, and fluorine-containing chain carbonates in the non-aqueous solvent is preferably from 50% by mass to 100% by mass, more preferably from 60% by mass to 100% by mass, and still more preferably from 80% by mass to 100% by mass.

The non-aqueous solvent preferably includes at least one selected from the group consisting of cyclic carbonates and chain carbonates.

In this case, the total proportion of cyclic carbonates and chain carbonates in the non-aqueous solvent is preferably from 50% by mass to 100% by mass, more preferably from 60% by mass to 100% by mass, and still more preferably from 80% by mass to 100% by mass.

The proportion of the non-aqueous solvent in the non-aqueous electrolytic solution according to the present disclosure is preferably at least 60% by mass, and more preferably at least 70% by mass.

<Cyclic Carbonate Ester Compound Containing Carbon-Carbon Unsaturated Bond>

The non-aqueous electrolytic solution according to the present disclosure preferably includes at least one cyclic carbonate ester compound containing a carbon-carbon unsaturated bond. In a case in which the non-aqueous electrolytic solution according to the present disclosure includes a cyclic carbonate ester compound containing a carbon-carbon unsaturated bond, the chemical stability of the non-aqueous electrolytic solution can further be improved.

Examples of the cyclic carbonate ester compound containing a carbon-carbon unsaturated bond include vinylene carbonate-based compounds, vinylethylene carbonate-based compounds, methylene ethylene carbonate-based compounds, and the like.

Examples of vinylene carbonate-based compounds include vinylene carbonate (another name: 1,3-dioxol-2-one), methylvinylene carbonate (another name: 4-methyl-1,3-dioxol-2-one), ethylvinylene carbonate (another name: 4-ethyl-1,3-dioxol-2-one), 4,5-dimethyl-1,3-dioxol-2-one, 4,5-diethyl-1,3-dioxol-2-one, 4-fluoro-1,3-dioxol-2-one, 4-trifluoromethyl-1,3-dioxol-2-one, and the like.

Examples of vinyl ethylene carbonate-based compounds include vinyl ethylene carbonate (another name: 4-vinyl-1,3-dioxolane-2-one), 4-methyl-4-vinyl-1,3-dioxolane-2-one, 4-ethyl-4-vinyl-1,3-dioxolane-2-one, 4-(n-propyl)-4-vinyl-1,3-dioxolane-2-one, 5-methyl-4-vinyl-1,3-dioxolan-2-one, 4,4-divinyl-1,3-dioxolane-2-one, 4,5-divinyl-1,3-dioxolan-2-one, and the like.

Examples of methylene ethylene carbonate-based compounds include 4-methylene-1,3-dioxolan-2-one, 4,4-dimethyl-5-methylene-1,3-dioxolan-2-one, 4,4-diethyl-5-methylene-1,3-dioxolan-2-one, and the like.

Vinylene carbonate is particularly preferable as the cyclic carbonate ester compound containing a carbon-carbon unsaturated bond.

In a case in which the non-aqueous electrolytic solution according to the present disclosure includes a cyclic carbonate ester compound containing a carbon-carbon unsaturated bond, the content of the cyclic carbonate ester compound containing a carbon-carbon unsaturated bond is preferably from 0.1% by mass to 10.0% by mass, more preferably from 0.2% by mass to 5.0% by mass, still more preferably from 0.2% by mass to 2.0% by mass, and further more preferably from 0.2% by mass to 1.0% by mass, with respect to the total amount of the non-aqueous electrolytic solution.

In a case in which the non-aqueous electrolytic solution according to the present disclosure includes vinylene carbonate, the content of vinylene carbonate is preferably from 0.1% by mass to 10.0% by mass, more preferably from 0.2% by mass to 5.0% by mass, still more preferably from 0.2% by mass to 2.0% by mass, and further more preferably from 0.2% by mass to 1.0% by mass, with respect to the total amount of the non-aqueous electrolytic solution.

In a case in which the non-aqueous electrolytic solution according to the present disclosure includes a cyclic carbonate ester compound containing a carbon-carbon unsaturated bond, the ratio of the total content of compound (P) and the sulfuric ester compound to the content by mass of the cyclic carbonate ester compound (hereinafter also referred to as the "content mass ratio [(compound (P) + sulfuric ester compound) / cyclic carbonate ester compound containing a carbon-carbon unsaturated bond]" is preferably from 0.3 to 5.0, more preferably from 0.5 to 4.0, and still more preferably from 0.8 to 3.0.

In a case in which the content mass ratio [(compound (P) + sulfuric ester compound) / cyclic carbonate ester compound containing a carbon-carbon unsaturated bond] is 0.3 or more, the above-described effect exerted by the combination of compound (P) and the sulfuric ester compound is more effectively produced.

In a case in which the content mass ratio [(compound (P) + sulfuric ester compound) / cyclic carbonate ester compound containing a carbon-carbon unsaturated bond] is 5.0 or less, the effect exerted by addition of the cyclic

carbonate ester compound containing a carbon-carbon unsaturated bond is more effectively produced.

<Other Components>

The non-aqueous electrolytic solution according to the present disclosure may include at least one other component than the foregoing components.

[Lithium Secondary Battery Precursor and Lithium Secondary Battery]

The lithium secondary battery precursor according to the present disclosure includes a positive electrode, a negative electrode, and the above-described non-aqueous electrolytic solution according to the present disclosure.

The lithium secondary battery according to the present disclosure is a lithium secondary battery obtained by charging and discharging (hereinafter also referred to as "charging-discharging") the lithium secondary battery precursor according to the present disclosure.

In the present disclosure, a lithium secondary battery precursor means a lithium secondary battery that has not been subjected to charging and discharging after production. In other words, in the present disclosure, a lithium secondary battery means a battery obtained by charging and discharging a lithium secondary battery precursor.

The lithium secondary battery precursor according to the present disclosure includes the above-described non-aqueous electrolytic solution according to the present disclosure. Due to this configuration, the lithium secondary battery precursor according to the present disclosure with the non-aqueous electrolytic solution according to the present disclosure provide the same effect as that produced by the non-aqueous electrolytic solution according to the present disclosure.

Respective components that may be included in the lithium secondary battery precursor according to the present disclosure are described below. Respective components that may be included in the lithium secondary battery according to the present disclosure are basically the same as the respective components that may be included in the lithium secondary battery precursor according to the present disclosure.

In the lithium secondary battery according to the present disclosure, preferably, a solid electrolyte interface (SEI) film is formed on a surface of the positive electrode (preferably, positive electrode active material) and/or the negative electrode (preferably, negative electrode active material). An SEI film is a coating film that can be formed by subjecting the lithium secondary battery precursor to charging and discharging. The SEI film includes components of the non-aqueous electrolytic solution and/or products (for example, decomposition products) derived from such components.

<Negative Electrode>

The negative electrode is a negative electrode that can absorb and release lithium ions. The negative electrode preferably includes at least one negative electrode active material. The negative electrode active material in the negative electrode preferably includes a carbon material capable of absorbing and releasing lithium ions. In a case in which the negative electrode active material includes such a carbon material, the stability of an SEI film generated by charging-discharging further improves. More specifically, the foregoing carbon material exhibits a smaller morphological change during charging-discharging than other negative electrode active materials (such as metallic Li, metallic Si, and silicon oxide), and, therefore, the carbon material is advantageous in terms of stability of the SEI film.

The negative electrode active material may include both of the foregoing carbon material and another negative electrode active material (such as metallic Li, metallic Si, or silicon oxide).

Examples of the carbon material serving as the negative electrode active material include hard carbon, soft carbon, MCMB, natural graphite, synthetic graphite, and the like. Natural graphite and synthetic graphite may each be coated with amorphous carbon.

Among these, hard carbon, MCMB, natural graphite coated with amorphous carbon, or synthetic graphite coated with amorphous carbon is preferable from the viewpoint that these materials provide high stability of the SEI film formed on the negative electrode and have high capacity to absorb lithium ions.

The negative electrode preferably includes a negative electrode current collector. The material of the negative electrode current collector is not particularly limited, and known materials may freely be used. Specific examples of the negative electrode current collector include metal materials such as copper, nickel, stainless steel, and nickel-plated steel. Among them, in particular, copper is preferable from the viewpoint of ease of processing.

The negative electrode may include a negative electrode current collector and a negative electrode active material layer provided at at least a part of a surface of the negative electrode current collector.

The negative electrode active material layer includes at least one negative electrode active material. The negative electrode active material contained in the negative electrode active material layer includes the above-described

carbon material.

From the viewpoint of the energy density of the battery, the content of the carbon material in the negative electrode active material layer is preferably at least 70% by mass, more preferably at least 80% by mass, and still more preferably at least 90% by mass, with respect to the total amount of the negative electrode active material layer.

The negative electrode active material layer may further include at least one binder. At least one selected from the group consisting of styrene-butadiene (SBR) rubber (for example, a SBR latex), acrylonitrile-butadiene rubber, acrylonitrile-butadiene-styrene rubber, carboxymethylcellulose (CMC), hydroxypropyl methylcellulose, polyvinyl alcohol, hydroxypropylcellulose, and diacetylcellulose is preferable as the binder. The binder preferably includes a SBR latex and carboxymethylcellulose.

The content of binder in the negative electrode active material layer is preferably from 1% by mass to 20% by mass, more preferably from 1% by mass to 10% by mass, and still more preferably from 1% by mass to 5% by mass, with respect to the total amount of the negative electrode active material layer.

<Positive Electrode>

The positive electrode preferably includes at least one positive electrode active material. The positive electrode active material is not particularly limited, and known positive electrode active materials may be used. A lithium transition metal oxide or a lithium metal phosphate is preferable as the positive electrode active material.

Examples of the lithium transition metal oxide include lithium cobalt oxide ($LiCoO_2$), lithium manganese oxide ($LiMnO_2$ or $LiMn_2O_4$), lithium nickel oxide ($LiNiO_2$), lithium nickel cobalt oxide, lithium nickel manganese cobalt oxide (hereinafter also referred to as "NMC"), lithium nickel cobalt aluminum oxide (hereinafter also referred to as "NCA"), and the like.

Examples of the lithium metal phosphate include lithium iron phosphate ($LiFePO_4$), lithium manganese phosphate ($LiMnPO_4$), lithium manganese iron phosphate ($LiMn_{(1-X)}FexPO_4$; $0<X<1$), and the like.

The positive electrode active material preferably includes a lithium transition metal oxide, more preferably includes NMC, and still more preferably includes a compound represented by the following Formula (X), from the viewpoint of more effectively exerting the effect produced by the non-aqueous electrolytic solution according to the present disclosure.

Formula (X): $LiNi_aMn_bCo_cC_2$

In Formula (X), each of a, b, and c is independently from more than 0 to less than 1.00, and the sum of a, b, and c is from 0.99 to 1.00.

Specific examples of the compound represented by Formula (X) include $LiNi_{0.33}Mn_{0.33}Co_{0.33}O_2$, $LiNi_{0.5}Mn_{0.2}Co_{0.3}O_2$, $LiNi_{0.5}Mn_{0.3}Co_{0.2}O_2$, $LiNi_{0.6}Mn_{0.2}Co_{0.2}O_2$, and the like.

In Formula (X), *a* is preferably at least 0.20, more preferably at least 0.30, still more preferably at least 0.50, and further more preferably at least 0.70. A larger *a* value (i.e., a higher Ni content) is more advantageous from the viewpoint that a larger *a* value provides a larger capacity (energy density) of the battery.

In Formula (X), *a* is preferably at most 0,95, and more preferably at most 0.90.

In Formula (X), *b* is preferably at least 0.05, and more preferably at least 0.10. In Formula (X), *b* is preferably at most 0.90, more preferably at most 0.50, and still more preferably at most 0.40.

In Formula (X), c is preferably at least 0.05, and more preferably at least 0.10. In Formula (X), c is preferably at most 0.90, more preferably at most 0.50, and still more preferably at most 0.40.

The positive electrode may include at least one conductive aid. Examples of the conductive aid include carbon materials such as carbon black, amorphous whisker, and graphite.

The positive electrode preferably includes a positive electrode current collector. The material of the positive electrode current collector is not particularly limited, and known materials may freely be used.

Specific examples of the positive electrode current collector include metal materials such as aluminum, stainless steel, nickel, titanium, and tantalum; carbon materials such as carbon cloth and carbon paper; and the like. Among them, aluminum is preferable from the viewpoint of the balance between high conductivity and the cost. Here, "aluminum" means pure aluminum or an aluminum alloy.

The positive electrode may include a positive electrode current collector and a positive electrode active material layer provided at at least a part of a surface of the positive electrode current collector.

The positive electrode active material layer includes at least one positive electrode active material. Preferable positive electrode active materials are as described above.

From the viewpoint of the energy density of the battery, the content of the positive electrode active material in the positive electrode active material layer is preferably at least 70% by mass, and more preferably at least 80% by mass, with respect to the total amount of the positive electrode active material layer.

The positive electrode active material layer may further include at least one of the above-described conductive aid. The positive electrode active material layer may further include at least one binder. Examples of the binder include polyvinyl acetate, polymehyl methacrylate, nitrocellulose, fluororesins, rubber particles, and the like. Examples of fluororesins include polytetrafluoroethylene (PTFE), polyvinylidene fluoride (PVDF), tetrafluoroethylene-hexafluoropropylene copolymer (FEP), vinylidene fluoride-hexafluoropropylene copolymer, and the like. Examples of rubber particles include styrene-butadiene rubber particles, acrylonitrile rubber particles, and the like. Among them, fluororesins are preferable from the viewpoint of improving the oxidation resistance of the positive electrode active material layer.
The content of binder in the positive electrode active material layer is preferably from 1% by mass to 20% by mass, and more preferably from 1% by mass to 10% by mass, with respect to the total amount of the positive electrode active material layer.

<Separator>

The lithium secondary battery precursor according to the present disclosure preferably includes a separator between the negative electrode and the positive electrode. A separator is a membrane that electrically insulates the positive electrode and the negative electrode from each other, and allows lithium ions to pass through the separator. Examples of the separator include porous membranes and polymer electrolytes.
A microporous polymer film is suitably used as a porous membrane, and examples of the material thereof include polyolefins, polyimides, polyvinylidene fluorides, polyesters, and the like.
Porous polyolefins are particularly preferable, and specific examples thereof include a porous polyethylene film, a porous polypropylene film, or a multilayer film composed of a porous polyethylene film and a porous polypropylene film. Another resin having excellent heat stability may be coated on the porous polyolefin film.
Examples of polymer electrolytes include polymers in which a lithium salt is dissolved, polymers that are swollen with an electrolytic solution, and the like. The non-aqueous electrolytic solution according to the present disclosure may be used for the purpose of obtaining a polymer electrolyte by swelling a polymer.

<Configuration of Lithium Secondary Battery Precursor>

The lithium secondary battery precursor according to the present disclosure may take various known forms, and may be formed in a cylindrical shape, a coin shape, a rectangular shape, a laminate shape, a film shape, or any other shape. However, the basic structure of the lithium secondary battery precursor is the same irrespective of the shape, and design modifications may be applied in accordance with the purpose.
With respect to the basic structure of the lithium secondary battery according to the present disclosure, the basic structure of the lithium secondary battery precursor according to the present disclosure may be referenced.
An example of the lithium secondary battery precursor according to the present disclosure or the lithium secondary battery according to the present disclosure is a laminated battery.
Fig. 1 is a schematic perspective view illustrating an example of a laminated battery that is one example of the lithium secondary battery precursor according to the present disclosure or the lithium secondary battery according to the present disclosure. Fig. 2 is a schematic cross-sectional view in the thickness direction of stacked electrodes housed in the laminated battery illustrated in Fig. 1.
The laminated battery illustrated in Fig. 1 includes a laminate outer case 1 that houses a non-aqueous electrolytic solution (not shown in Fig. 1) and stacked electrodes (not shown in Fig. 1) in the interior of the laminate outer case, and in which the periphery of the laminate outer case is sealed to tightly close the interior of the laminate outer case. A laminate outer case made of aluminum, for example, is used as the laminate outer case 1.
The stacked electrodes housed in the laminate outer case 1 include: a stack composed of positive electrode plates 5 and negative electrode plates 6 that are alternately layered with a separator 7 disposed therebetween; and a separator 8 that encloses the stack, as illustrated in Fig. 2. The positive electrode plates 5, the negative electrode plates 6, the separators 7, and the separator 8 are impregnated with the non-aqueous electrolytic solution according to the present disclosure. Here, the separator 8 that encloses the stack may be omitted.
Each of the plural positive electrode plates 5 in the stacked electrodes is electrically connected (not shown) to a positive electrode terminal 2 via a positive electrode tab, and a part of the positive electrode terminal 2 protrudes outwardly from the periphery of the laminate outer case 1 (Fig. 1). The portion of the periphery of the laminate outer case 1 at which the positive electrode terminal 2 protrudes is sealed with an electrically insulating seal 4.
In a similar manner, each of the plural negative electrode plates 6 in the stacked electrodes is electrically connected (not shown) to a negative electrode terminal 3 via a negative electrode tab, and a part of the negative electrode terminal 3 protrudes outwardly from the periphery of the laminate outer case 1 (Fig. 1). The portion of the periphery of the laminate outer case 1 at which the negative electrode terminal 3 protrudes is sealed with an electrically insulating seal 4.
In the laminated battery according to the foregoing example, the number of the positive electrode plates 5 is

five, the number of the negative electrode plates 6 is six, and the positive electrode plates 5 and the negative electrode plates 6 are layered with a separator 7 disposed therebetween, in an arrangement such that the outermost layers at both sides are negative electrode plates 6. However, it is needless to say that the number of the positive electrode plates, the number of the negative electrode plates, and the arrangement in the laminated battery are not limited to those in this particular example, and that various modifications may be made.

Another example of the lithium secondary battery precursor according to the present disclosure or the lithium secondary battery according to the present disclosure is a coin battery.

Fig. 3 is a schematic perspective view illustrating one example of a coin battery that is another example of the lithium secondary battery precursor according to the present disclosure or the lithium secondary battery according to the present disclosure.

In the coin battery illustrated in Fig. 3, a disc-shaped negative electrode 12, a separator 15 impregnated with a non-aqueous electrolytic solution, a disc-shaped positive electrode 11, and, if necessary, spacer plates 17 and 18 made of stainless steel, aluminum or the like, are layered in this order, and are housed between a positive electrode can 13 (hereinafter also referred to as a "battery can") and a seal plate 14 (hereinafter also referred to as a "battery cap") in this state. The positive battery can 13 and the seal plate 14 are subjected to sealing by seaming with a gasket 16 disposed therebetween.

In this example, the non-aqueous electrolytic solution according to the present disclosure is used as the non-aqueous electrolytic solution to be supplied to the separator 15.

The application of the lithium secondary battery precursor according to the present disclosure or the lithium secondary battery according to the present disclosure is not particularly limited, and they may be widely used in applications including both of small-sized portable devices and large-sized machines. Examples of uses of the lithium secondary battery precursor according to the present disclosure or the lithium secondary battery according to the present disclosure include laptop personal computers, mobile personal computers, cell phones, headphone stereo devices, video cameras, liquid crystal televisions, handy cleaners, electronic organizers, electronic calculators, radios, back-up power sources, electricity storage power sources (for example, power sources for storage of night-time electricity, power sources for storage of surplus electricity of solar power generation, or the like), motors, automobiles, electric vehicles, hybrid vehicles, motorcycles, electric motorcycles, bicycles, electric bicycles, lightening devices, game machines, clocks/watches, electric power tools, cameras, and the like.

[Method of Producing Lithium Secondary Battery]

A method of producing a lithium secondary battery according to the present disclosure includes:

a step of providing the lithium secondary battery precursor according to the present disclosure (hereinafter also referred to as a "preparation step) and
a step of charging and discharging the lithium secondary battery precursor.

The preparation step may be a step of simply providing an already-produced lithium secondary battery precursor according to the present disclosure, for the purpose of subjecting the lithium secondary battery precursor to the step of charging and discharging, or may be a step of producing a lithium secondary battery precursor according to the present disclosure. The specifics of the lithium secondary battery precursor are as described above.

In the step of performing charging and discharging, the charging and discharging for the lithium secondary battery precursor may be performed according to a known method. In this step, a charging-discharging cycle may be repeatedly carried out plural times on the lithium secondary battery precursor. As described above, an SEI film is preferably formed on a surface of the positive electrode (in particular, positive electrode active material) and/or a surface of the negative electrode (in particular, negative electrode active material) in the lithium secondary battery precursor, as a result of the charging and discharging.

EXAMPLES

Examples according to the present disclosure are described below, but the present disclosure is not limited by the examples provided below.

In the following examples, the "addition amount" means a content in the finally obtained non-aqueous electrolytic solution (i.e., an amount relative to the total amount of the finally obtained non-aqueous electrolytic solution). Further, "wt%" means % by mass. Moreover, "%" means "% by mass" unless specified otherwise.

[Example 1-1]

<Preparation of Non-aqueous Electrolytic Solution>

By mixing ethylene carbonate (hereinafter referred to as "EC") and methyl ethyl carbonate (EMC) in a ratio of EC:EMC=30:70 (volume ratio), a mixed solvent, serving as a non-aqueous solvent, was obtained.

An electrolyte $LiPF_6$ was dissolved in the obtained mixed solvent such that the concentration of $LiPF_6$ in the finally prepared non-aqueous electrolytic solution would be 1 mol/L (hereinafter also expressed as "1 M");

vinylene carbonate (VC) as an additive was dissolved such that the content of vinylene carbonate in the finally prepared non-aqueous electrolytic solution would be 0.5% by mass;
compound (P-1) as an additive was dissolved such that the content of compound (P-1) in the finally prepared non-aqueous electrolytic solution would be 0.5% by mass, and
compound (C-1) as an additive was dissolved such that the content of compound (C-1) in the finally prepared non-aqueous electrolytic solution would be 0.05% by mass.

Compound (P-1) is a specific example of the compound represented by Formula (P) (hereinafter also referred to as "compound (P)"), compound (C-1) is a specific example of the compound represented by Formula (C) (hereinafter also referred to as "compound (C)"), and VC is a specific example of the cyclic carbonate ester compound containing a carbon-carbon unsaturated bond.

<Preparation of Lithium Secondary Battery (Stacked Battery)>

A stacked battery for evaluation of heat generation rate was prepared as a lithium secondary battery. Details are provided below.

(Preparation of Positive Electrode)

-Preparation of Slurry-

A 5L planetary Disper was used for slurry preparation. After 920 g of NMC532 (specifically, $LiNi_{0.5}Mn_{0.3}Co_{0.2}O_2$) as a positive electrode active material, 20 g of SUPER-P (conductive carbon manufactured by TIMCAL) as a conductive aid, and 20 g of KS-6 (flake-shaped graphite manufactured by TIMREX) as a conductive aid were mixed for 10 minutes, 100 g of N-methylpyrrolidone (NMP) was added thereto, followed by further mixing for 20 minutes.

Thereafter, 150 g of 8% PVDF solution (PVDFW#7200 manufactured by Kureha, dissolved in NMP) was added thereto, and kneading was performed for 30 minutes. Then, further, 150 g of the 8% PVDF solution was added thereto, and kneading was performed for 30 minutes. Thereafter, 200 g of the 8% PVDF solution was added thereto, and kneading was performed for 30 minutes. Thereafter, 80 g of NMP was added thereto, and kneading was performed for 30 minutes. Thereafter, 27 g of NMP was added thereto for viscosity adjustment, and mixed for 30 minutes, and then vacuum defoaming was performed for 30 minutes.

As a result of the foregoing, a positive electrode mix slurry having a solid concentration of 60% was obtained.

-Coating and Drying-

A die coater was used for slurry coating. The above-described positive electrode mix slurry was applied to a part of one side of an aluminum foil (having a thickness of 20 μm and a width of 200 mm) as a positive electrode current collector such that the coating mass after drying would be 19.0 $mg/cm^2$, and the slurry was dried. Then, the above-described positive electrode mix slurry was similarly applied to a part of the other side (the uncoated side) of the aluminum foil such that the coating mass would be 19.0 $mg/cm^2$, and the slurry was dried.

The dual-side-coated aluminum foil (with a coating amount of 38.0 $mg/cm^2$ as a total of both sides) obtained as described above was dried at 130°C for 12 hours in a vacuum drying oven.

-Pressing-

The dual-side-coated aluminum foil after the drying was pressed at a press density of $2.9 \pm 0.05$ $g/cm^3$, using a 35-ton pressing machine.

-Slitting-

The dual-side-coated aluminum foil after the pressing was slit to leave a coated portion (40 mm × 29 mm) and a blank area for welding to a tab, whereby a positive electrode was obtained.

(Preparation of Negative Electrode)

-Slurry Preparation-

A 5L planetary Disper was used for slurry preparation. After 450 g of a 1% CMC aqueous solution (specifically, a 1% by mass aqueous solution of carboxymethylcellulose (CMC)) was added to 960 g of natural graphite as a negative electrode active material and 10 g of SUPER-P (conductive carbon having a BET specific surface area of 62 $m^2/g$) as a conductive aid, mixing was performed for 30 minutes.
To the mixture obtained, 300 g of a 1% CMC aqueous solution was added, and kneading was performed for 30 minutes. Thereafter, further, 250 g of a 1% CMC aqueous solution was added thereto, and kneading was performed for 30 minutes.
To the kneaded material obtained, 50 g of styrene-butadiene rubber (SBR) as a binder (40% emulsion liquid) was added, and mixing was performed for 30 minutes, and then vacuum defoaming was performed for 30 minutes.
As a result of the foregoing, a negative electrode mix slurry having a solid concentration of 45% was obtained.

-Coating and Drying-

A die coater was used for slurry coating. The above-described negative electrode mix slurry was applied to a part of one side of an copper foil (having a thickness of 10 μm) as a negative electrode current collector such that the coating mass after drying would be 11.0 $mg/cm^2$, and the slurry was dried. Then, the above-described negative electrode mix slurry was applied to a part of the other side (the uncoated side) the copper foil such that the coating mass would be 11.0 $mg/cm^2$, and the slurry was dried.
The dual-side-coated copper foil (with a coating amount of 22.0 $mg/cm^2$ as a total of both sides) obtained as described above was dried at 120°C for 12 hours in a vacuum drying oven.

-Pressing-

The dual-side-coated copper foil after the drying was pressed at a press density of 1.45 ± 0.05 $g/cm^3$, using a compact pressing machine.

-Slitting-

The dual-side-coated copper foil after the pressing was slit to leave a coated portion (42 mm × 31 mm) and a blank area for welding to a tab, whereby a negative electrode was obtained.

(Production of Stacked Battery Precursor)

A polyethylene porous film (50 mm × 50 mm) having a porosity of 45% and a thickness of 25 μm was used as a separator.
The negative electrode (front face), the separator, the positive electrode (the rear face/front face), the separator, and the negative electrode (front face) were sequentially stacked and fixed, to obtain a stack. An aluminum tab as a positive electrode tab was welded to the blank area of the positive electrode of the obtained stack, using an ultrasonic welder, and nickel tabs as negative electrode tabs were welded to the blank areas of the negative electrodes, using a ultrasonic welder. The stack having the positive electrode tab and negative electrode tabs joined to the stack was sandwiched between laminate sheets, and three sides were thermally sealed, thereby obtaining a laminated body.
The interior of the laminated body obtained above was dried under reduced pressure at 70 °C for 12 hours in a vacuum dryer. Into the laminated body after the drying under reduced pressure, the above-described non-aqueous electrolytic solution in an amount of 1.20 ± 0.05 g was injected from the remaining side that had not been thermally sealed, and the remaining side was thermally sealed while vacuum suction was performed, whereby a stacked battery precursor (i.e, a stacked battery before being charged and discharged) was obtained.
(Production of Stacked Battery)
The above stacked battery precursor was left to stand at 25°C for 24 hours in the atmospheric air. Next, the stacked battery precursor was subjected to constant-current charging (0.1 C - CC) for 3 hours at 0.1 C, and then the

charging was paused at 25°C for 12 hours. Thereafter, the stacked battery precursor after the pausing was subjected to constant-current constant-voltage charging (0.1 C - CCCV) at 0.1 C up to 4.2 V (SOC 100%), and the charging was paused for 30 minutes, after which the stacked battery precursor was subjected to constant-current discharging (0.1 C - CC) at 0.1 C down to 2.8 V, thereby obtaining a stacked battery.

<Evaluation of Rate of Heat Generation in the Interior of Battery at the Time of Short-Circuit>

The following nail-piercing test was performed with respect to the stacked battery, as an evaluation of the rate of heat generation in the interior of the battery at the time of short-circuit.

(Nail-piercing Test)

The stacked battery produced above was subjected to constant-current constant-voltage charging (0.1 C-CCCV) at 0.1C up to 4.2 V (SOC 100%), and a nail-piercing test was performed. A nail having a diameter of 3 mm, a length of 15 mm, and a tip angle of 30°, and having a blind hole with a diameter of 0.6 mm was covered with MACOR (registered trademark). Then, a sheath-type K thermocouple (product number: IP10-K-0.5-200) having a sheath portion diameter of 0.5 mm and a sheath length of 200 mm was inserted down to a position near the tip portion of the nail, thereby obtaining a nail-piercing test tool.

The nail-piercing test tool and the stacked battery were fixed to a nail-piercing test apparatus (TYS-94DM45 manufactured by Toyo System), and the nail-piercing test tool was forced to pierce into the interior of the battery (cell) at a rate of 1 mm/sec., thereby causing the positive electrode and the negative electrode to be short-circuited in the interior of the battery container. The temperature of the interior of the battery measured by the nail-piercing test toll and the surface temperature obtained from a thermocouple attached to the surface of the battery were measured over time.

-Calculation of Heat Generation Rate-

The heat generation rate of the battery was calculated from the measurement results of the foregoing nail-piercing test, as described below. Specifically, after the occurrence of short-circuit, the time until the battery interior temperature increased by 0.2 °C was taken as a heat generation initiation time $T_0$ (sec.), and the point of time that is 1 second after $T_0$ was taken as $T_1$ (sec.). Assuming that the battery interior temperature at $T_0$ was $H_0$ (°C), and that the battery interior temperature at $T_1$ was $H_1$ (°C), the heat generation rate directly after short-circuit was calculated based on the following expression.

$$\text{Heat Generation Rate: } (H_1-H_0)/(T_1-T_0)$$

The results of the heat generation rate are shown in Table 1. The results with respect to the heat generation rate are expressed in terms of a relative value X calculated by assuming that the heat generation rate in Comparative Example A, in which neither compound (P) nor compound (C) was contained and only VC was contained, was 100, and in terms of a relative value Y calculated by assuming that the heat generation rate in a comparative example in which compound (C) was not contained and only compound (P) and VC were contained (e.g., Comparative Example 1-1 to be compared to Example 1-1) was 100. The same applies to other Examples described below.

<Production of Lithium Secondary Battery (Coin Battery)>

A coin battery for evaluation of battery resistance was produced as a lithium secondary battery. Details are provided below.

(Preparation of Positive Electrode)

A mixture obtained by mixing $LiNi_{0.5}Mn_{0.3}Co_{0.2}O_2$ as a positive electrode active material (92 parts by mass), SUPER-P (conductive carbon manufactured by TIMCAL) as a conductive aid (2 parts by mass), KS-6 (flake-shaped graphite manufactured by TIMREX) as a conductive aid (2 parts by mass), and polyvinylidene fluoride as a binder (4 parts by mass) was dispersed in N-methylpyrrolidinone as a solvent, to prepare a paste-form positive electrode mix slurry.

The positive electrode mix slurry was applied to a 20 μm-thick belt-shaped aluminum foil (positive electrode current collector), and, after drying, compressed by a roll press, thereby obtaining a sheet-shaped positive electrode composed of a positive electrode current collector and a positive electrode active material layer. The coating mass of the positive electrode active material layer was 19.0 mg/cm$^2$, and the press density was 2.9±0.05 g/cm$^3$.

(Preparation of Negative Electrode)

Natural graphite as a negative electrode active material (96 parts by mass), SUPER-P as a conductive aid (1 parts by mass), sodium carboxymethylcellulose as a thickner dispersed in pure water (1 part by mass as solids amount), and styrene-butadiene rubber (SBR) (2 parts by mass) as a binder dispersed in pure water were added and mixed, to obtain a paste-form negative electrode mix slurry.

Next, the negative electrode mix slurry obtained was applied to a 10 μm-thick belt-shaped copper foil (negative electrode current collector), and, after drying, compressed by a roll press, thereby obtaining a sheet-shaped negative electrode composed of a negative electrode current collector and a negative electrode active material layer. The coating mass of the negative electrode active material layer was 11.0 $mg/cm^2$, and the press density was 1.45±0.05 $g/cm^3$.

(Preparation of Separator)

A microporous polyethylene film having a thickness of 20 μm was stamped into a disc shape having a diameter of 17 mm, thereby obtaining a coin-shaped separator.

(Production of Coin Battery Precursor)

The foregoing negative electrode was stamped in a disc shape having a diameter of 14 mm, and the foregoing positive electrode was stamped in a disc shape having a diameter of 13 mm, whereby a coin-shaped negative electrode and a coin-shaped positive electrode were obtained.

The coin-shaped positive electrode, the separator, and the coin-shaped negative electrode obtained were layered in this order in a stainless-steel battery can (2032 size), and then 20 μL of the above-described non-aqueous electrolytic solution were injected into the battery can, thereby causing the separator, the positive electrode, and the negative electrode to be impregnated with the non-aqueous electrolytic solution.

Then, a SUS plate (thickness: 0.5 mm, diameter: 16 mm) and a spring were placed on the negative electrode, and this battery can cap and the battery can were seamed with a polypropylene gasket disposed therebetween, to hermetically seal the battery.

In this manner, a coin battery precursor (i.e., a coin battery before being charged and discharged) having a diameter of 20 mm and a height of 3.2 mm and having a configuration as illustrated in Fig. 3 was obtained as a lithium secondary battery precursor (i.e., a lithium secondary battery before being charged and discharged).

(Production of Coin Battery)

The coin battery precursor described above was subjected to three cycles of charge-discharge between 2.8 V and 4.2 V at 25 °C in a constant-temperature chamber, to obtain a coin battery.

<Evaluation of Battery Resistance>

The following evaluations of battery resistance were performed with respect to the coin battery.

The coin battery was charged at and up to a constant voltage of 4.2 V at room temperature, and then discharged at a 0.1 C constant current at room temperature. A first electric potential reduction amount, which was a decrease within 10 seconds from the initiation of the discharge, was measured.

The coin battery was charged at and up to a constant voltage of 4.2 V at room temperature, and then discharged at a 0.2 C constant current at room temperature. A second electric potential reduction amount, which was a decrease within 10 seconds from the initiation of the discharge, was measured.

The coin battery was charged at and up to a constant voltage of 4.2 V at room temperature, and then discharged at a 0.5 C constant current at room temperature. A third electric potential reduction amount, which was a decrease within 10 seconds from the initiation of the discharge, was measured.

The coin battery was charged at and up to a constant voltage of 4.2 V at room temperature, and then discharged at a 1.0 C constant current at room temperature. A fourth electric potential reduction amount, which was a decrease within 10 seconds from the initiation of the discharge, was measured.

The battery resistance at an initial stage of discharge (direct-current resistance; DCIR) was calculated from the first to fourth electric potential reduction amounts, which were obtained during discharge at respective electric current rates.

The results with respect to the battery resistance (DCIR) are shown in Table 1.

The results with respect to the battery resistance (DCIR) are expressed in terms of a relative value X calculated by assuming that the battery resistance (DCIR) in Comparative Example A, in which neither compound (P) nor compound

(C) was contained and only VC was contained, was 100, and in terms of a relative value Y calculated by assuming that the battery resistance (DCIR) in a comparative example in which compound (C) was not contained and only compound (P) and VC were contained (e.g., Comparative Example 1-1 to be compared to Example 1-1) was 100. The same applies to other Examples described below.

[Comparative Example A, Comparative Example 1-1, Examples 1-2 to 1-3, Comparative Example 2-1, Examples 2-1 to 2-6, Comparative Example 2-2, Example 2-7, Comparative Example 3-1, Examples 3-1 to 3-6, Comparative Example 3-2, Examples 3-7 to 3-8, Comparative Example 4-1, Examples 4-1 to 4-3, Comparative Example 4-2, and Example 4-4]

The same procedures as those in Example 1-1 were carried out, except that the combination of the presence/absence of compound (P) as an additive, the type and addition amount of compound (P), the presence/absence of compound (C) as an additive, and the type and addition amount of compound (C) was changed as indicated in Table 1. The results are shown in Table 1. In all examples, the non-aqueous electrolytic solution includes 0.5% by weight of VC.

The additives in Table 1 are as follows. In compound (P-3), m represents 1, and in compound (P-4), x represents 1.

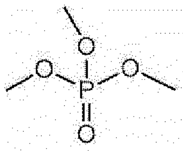

(P-1)

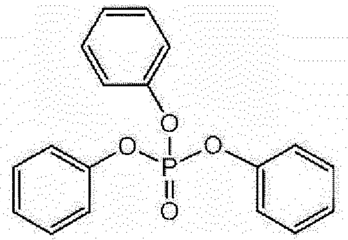

(P-2)

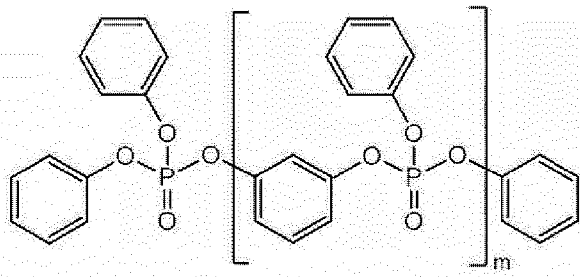

(P-3)

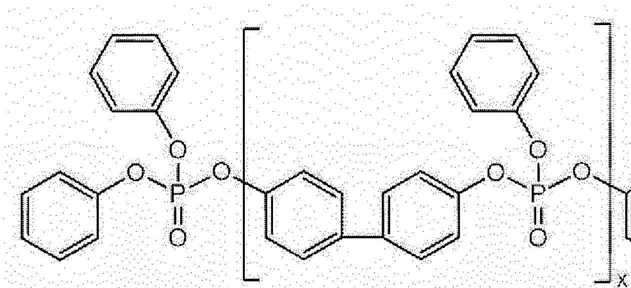

(P-4)

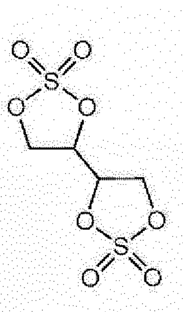

(C-1)

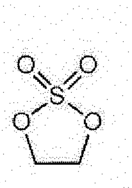

(C-4)

Table 1

| Additive | Composition of Non-aqueous Electrolytic solution (LiPF$_6$ (1M) + VC (0.5wt%) + additive indicated below) | | | | | | | Evaluation Results | | | |
|---|---|---|---|---|---|---|---|---|---|---|---|
| | Compound (P) | | | | Compound (C) | | Number Ratio [Sulfuric acid groups / phosphoric acid groups] | Heat Generation Rate (Stacked Battery) | | Battery Resistance (Coin Battery) | |
| | P-1 (wt%) | P-2 (wt%) | P-3 (wt%) | P-4 (wt%) | C-1 (wt%) | C-4 (wt%) | | Relative Value X | Relative Value Y | Relative Value X | Relative Value Y |
| Molecular Weight (g•mol$^{-1}$) | 140.07 | 326.29 | 574.09 | 650.55 | 246.22 | 124.11 | | | | | |
| Comparative Example A (VC only) | - | - | - | - | - | - | - | 100 | - | 100 | - |
| Comparative Example 1-1 | 0.5 | - | - | - | - | - | 0.00 | 82.5 | 100 | 109.2 | 100 |
| Example 1-1 | 0.5 | - | - | - | 0.05 | - | 0.11 | 80.9 | 98.1 | 108.3 | 99.2 |
| Example 1-2 | 0.5 | - | - | - | 0.2 | - | 0.46 | 68.3 | 82.8 | 108.4 | 99.3 |
| Example 1-3 | 0.5 | - | - | - | 0.5 | - | 1.14 | 68.2 | 82.7 | 103.2 | 94.5 |
| Comparative Example 2-1 | - | 0.5 | - | - | - | - | 0.00 | 77.2 | 100 | 106.4 | 100 |
| Example 2-1 | - | 0.5 | - | - | 0.05 | - | 0.27 | 66.1 | 85.6 | 103.0 | 96.8 |
| Example 2-2 | - | 0.5 | - | - | 0.2 | - | 1.06 | 56.5 | 73.2 | 102.8 | 96.6 |
| Example 2-3 | - | 0.5 | - | - | 0.4 | - | 2.12 | 64.8 | 83.9 | 104.1 | 97.8 |
| Example 2-4 | - | 0.5 | - | - | - | 0.05 | 0.26 | 71.3 | 92.3 | 105.2 | 98.9 |
| Example 2-5 | - | 0.5 | - | - | - | 0.2 | 1.05 | 68.2 | 88.3 | 104.5 | 98.2 |
| Example 2-6 | - | 0.5 | - | - | - | 0.4 | 2.10 | 75.6 | 97.9 | 105.9 | 99.5 |
| Comparative Example 2-2 | - | 1.0 | - | - | - | - | 0.00 | 69.9 | 100 | 109.1 | 100 |
| Example 2-7 | - | 1.0 | - | - | 0.2 | - | 0.53 | 66.9 | 95.7 | 103.1 | 94.5 |
| Comparative Example 3-1 | - | - | 0.5 | - | - | - | 0.00 | 96.7 | 100 | 106.5 | 100 |

(continued)

| | Composition of Non-aqueous Electrolytic solution ($LiPF_6$ (1M) + VC (0.5wt%) + additive indicated below) | | | | | | | Evaluation Results | | | |
|---|---|---|---|---|---|---|---|---|---|---|---|
| Additive | Compound (P) | | | | Compound (C) | | Number Ratio [Sulfuric acid groups / phosphoric acid groups] | Heat Generation Rate (Stacked Battery) | | Battery Resistance (Coin Battery) | |
| | P-1 (wt%) | P-2 (wt%) | P-3 (wt%) | P-4 (wt%) | C-1 (wt%) | C-4 (wt%) | | | | | |
| Molecular Weight ($g \cdot mol^{-1}$) | 140.07 | 326.29 | 574.09 | 650.55 | 246.22 | 124.11 | | Relative Value X | Relative Value Y | Relative Value X | Relative Value Y |
| Example 3-1 | - | - | 0.5 | | 0.05 | - | 0.23 | 69.7 | 72.1 | 96.9 | 91.0 |
| Example 3-2 | - | - | 0.5 | - | 0.2 | - | 0.93 | 37.6 | 38.9 | 104.6 | 98.2 |
| Example 3-3 | - | - | 0.5 | - | 0.5 | - | 2.33 | 74.6 | 77.1 | 97.2 | 91.3 |
| Example 3-4 | - | - | 0.5 | - | - | 0.05 | 0.23 | 81.6 | 84.4 | 103.7 | 97.4 |
| Example 3-5 | - | - | 0.5 | - | - | 0.2 | 0.93 | 73.6 | 76.1 | 103.5 | 97.2 |
| Example 3-6 | - | - | 0.5 | - | - | 0.4 | 1.85 | 85.4 | 88.3 | 98.7 | 92.7 |
| Comparative Example 3-2 | - | - | 1.0 | - | - | - | 0.00 | 85.5 | 100 | 109.0 | 100 |
| Example 3-7 | - | - | 1.0 | - | 0.2 | - | 0.47 | 83.7 | 97.9 | 106.3 | 97.5 |
| Example 3-8 | - | - | 1.0 | - | 0.4 | - | 0.93 | 69.4 | 81.2 | 103.9 | 95.3 |
| Comparative Example 4-1 | - | - | - | 0.5 | - | - | 0.00 | 74.3 | 100 | 105.5 | 100 |
| Example 4-1 | - | - | - | 0.5 | 0.05 | - | 0.26 | 72.1 | 97.0 | 104.1 | 98.7 |
| Example 4-2 | - | - | - | 0.5 | 0.2 | - | 1.06 | 55.0 | 74.0 | 103.2 | 97.8 |
| Example 4-3 | - | - | - | 0.5 | 0.4 | - | 2.11 | 62.5 | 84.1 | 102.3 | 97.0 |
| Comparative Example 4-2 | - | - | - | 1.0 | - | - | 0.00 | 74.5 | 100 | 105.6 | 100 |
| Example 4-4 | - | - | - | 1.0 | 0.2 | - | 0.53 | 64.4 | 86.4 | 104.3 | 98.8 |

As demonstrated in Table 1, heat generation rate at the time of short-circuit could be reduced while deterioration of battery performance (specifically, an increase in battery resistance in the case of Examples) was curbed in each of the Examples, in which a non-aqueous electrolytic solution containing compound (P) (i.e., a compound represented by Formula (P)) and compound (C) (i.e., a compound represented by Formula (C), which is a sulfuric ester compound) was used.

For example, use of the non-aqueous electrolytic solution of Comparative Example 1-1 resulted in a reduced heat generation rate at the time of battery short-circuit, but also resulted in an increase in battery resistance, as compared to the non-aqueous electrolytic solution of Comparative Example A (see comparison between Comparative Example A and Comparative Example 1-1). The non-aqueous electrolytic solution of Comparative Example 1-1 additionally included compound (P) as compared to the non-aqueous electrolytic solution of Comparative Example A, which included neither compound (P) nor compound (C).

The non-aqueous electrolytic solutions of Examples 1-1 to 1-3 additionally included compound (C) as compared to the non-aqueous electrolytic solution of Comparative Example 1-1. Use of the non-aqueous electrolytic solutions of Examples 1-1 to 1-3 resulted in a further reduction in the heat generation rate at the time of battery short-circuit, and also resulted in a smaller increase in battery resistance, as compared to the non-aqueous electrolytic solution of Comparative Example 1-1 (see comparison between Comparative Example 1-1 and each of Examples 1-1 to 1-3).

These trends can also be confirmed from the following comparisons:

comparison among Comparative Example A, Comparative Example 2-1, and each of Examples 2-1 to 2-6;
comparison among Comparative Example A, Comparative Example 2-2, and Example 2-7;
comparison among Comparative Example A, Comparative Example 3-1, and each of Examples 3-1 to 3-6;
comparison among Comparative Example A, Comparative Example 3-2, and Each of Examples 3-7 and 3-8;
comparison among Comparative Example A, Comparative Example 4-1, and each of Examples 4-1 to 4-3; and
comparison among Comparative Example A, Comparative Example 4-2, and Example 4-4.

The disclosure of Japanese Patent Application No. 2021-094572, filed June 4, 2021, was incorporated by reference herein in its entirety.

All publications, patent applications, and technical standards mentioned in this specification are herein incorporated by reference to the same extent as if each individual publication, patent application, or technical standard was specifically and individually indicated to be incorporated by reference.

## Claims

1. A non-aqueous electrolytic solution for a battery, comprising a compound represented by the following Formula (P) and a sulfuric ester compound:

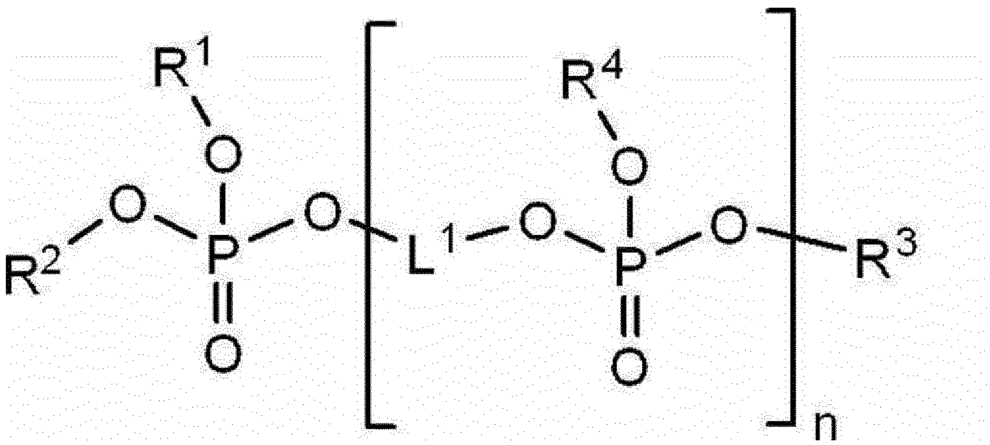

(P)

wherein, in Formula (P), each of $R^1$ to $R^4$ independently represents an alkyl group having from 1 to 6 carbon atoms or an aryl group having from 6 to 12 carbon atoms, $L^1$ represents an alkylene group having from 1 to 6 carbon atoms or an arylene group having from 6 to 12 carbon atoms, n represents an integer from 0 to 2, and in a case in which n is 2, two $R^4$s may be the same as or different from each other, and two $L^1$s may be the same as or different from each other.

2. The non-aqueous electrolytic solution for a battery according to claim 1, wherein the compound represented by Formula (P) includes at least one selected from the group consisting of compound (P-1), compound (P-2), compound (P-3), and compound (P-4) shown below:

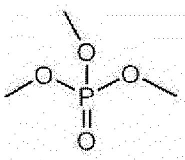

(P-1)

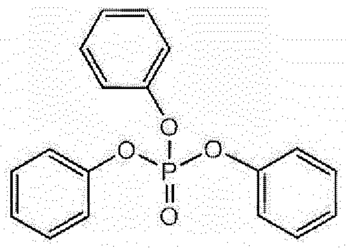

(P-2)

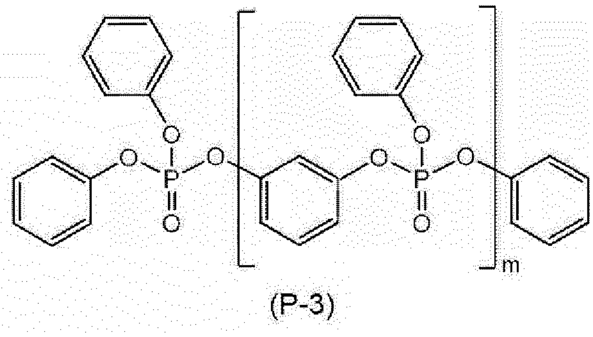

(P-3)

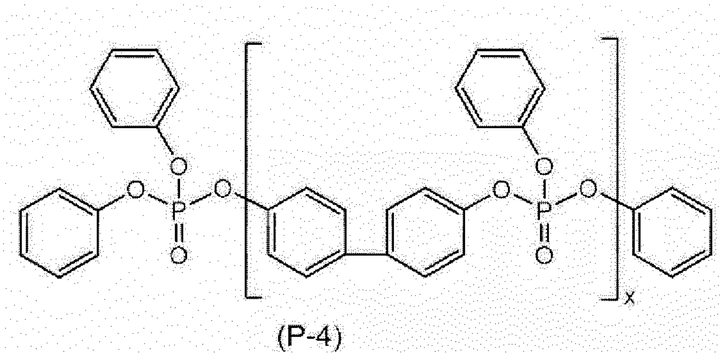

(P-4)

wherein, in compound (P-3), m represents 1 or 2, and, in Formula (P-4), x represents 1 or 2.

3. The non-aqueous electrolytic solution for a battery according to claim 1 or claim 2, wherein the sulfuric ester compound includes a cyclic sulfuric ester compound.

4. The non-aqueous electrolytic solution for a battery according to any one of claims 1 to 3, wherein the sulfuric ester compound includes a compound represented by the following Formula (C):

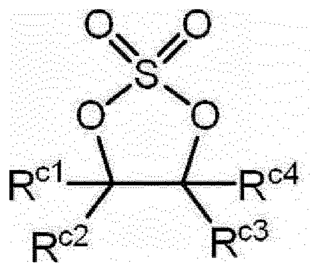

(C)

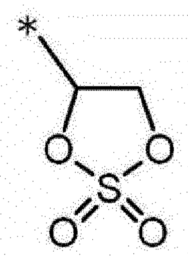

(a)

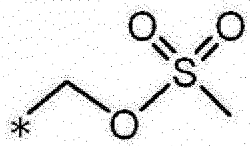

(b)

wherein, in Formula (C), each of $R^{c1}$ to $R^{c4}$ independently represents a hydrogen atom, a hydrocarbon group having from 1 to 6 carbon atoms, a group represented by Formula (a), or a group represented by Formula (b), and in Formulae (a) and (b), * represents the bonding position.

5. The non-aqueous electrolytic solution for a battery according to claim 4, wherein the compound represented by Formula (C) includes at least one selected from the group consisting of the following compound (C-1) and the following compound (C-4):

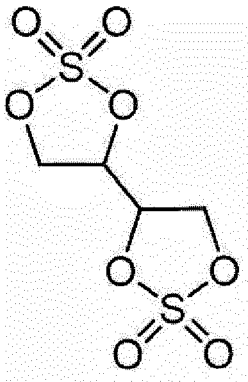

(C-1)

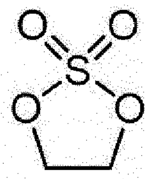

(C-4)

.

6. The non-aqueous electrolytic solution for a battery according to any one of claims 1 to 5, wherein a number ratio (sulfuric acid groups / phosphoric acid groups) of a number of sulfuric acid groups contained in a total amount of the sulfuric ester compound to a number of phosphoric acid groups contained in a total amount of the compound represented by Formula (P) is from more than 0 to 3.00.

7. The non-aqueous electrolytic solution for a battery according to any one of claims 1 to 6, wherein a content of the compound represented by Formula (P) is from 0.1% by mass to 1.0% by mass with respect to a total amount of the non-aqueous electrolytic solution for a battery.

8. The non-aqueous electrolytic solution for a battery according to any one of claims 1 to 7, further comprising a cyclic carbonate ester compound containing a carbon-carbon unsaturated bond.

9. A lithium secondary battery precursor, comprising:

a positive electrode;
a negative electrode; and
the non-aqueous electrolytic solution for a battery of any one of claim 1 to 8.

10. A method of producing a lithium secondary battery, the method comprising the steps of:

providing the lithium secondary battery precursor of claim 9; and
charging and discharging the lithium secondary battery precursor, to obtain a lithium secondary battery.

11. A lithium secondary battery obtained by charging and discharging the lithium secondary battery precursor of claim 9.

FIG.1

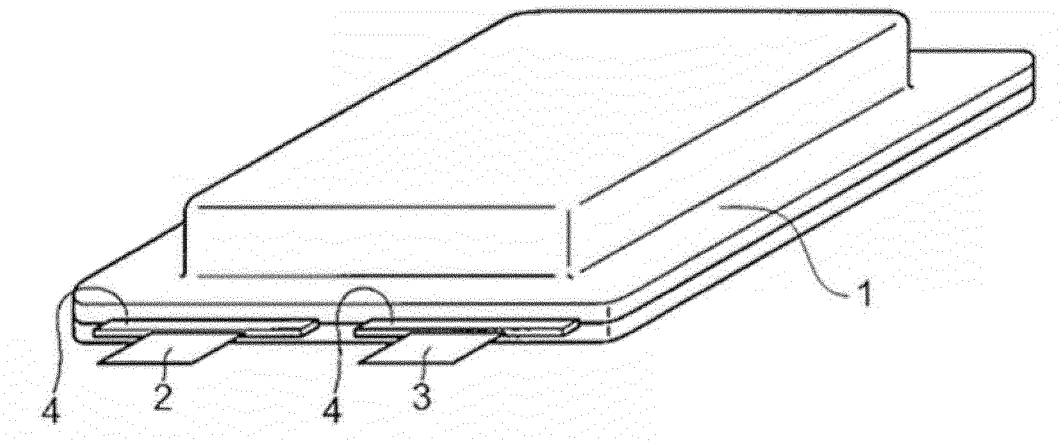


FIG.2

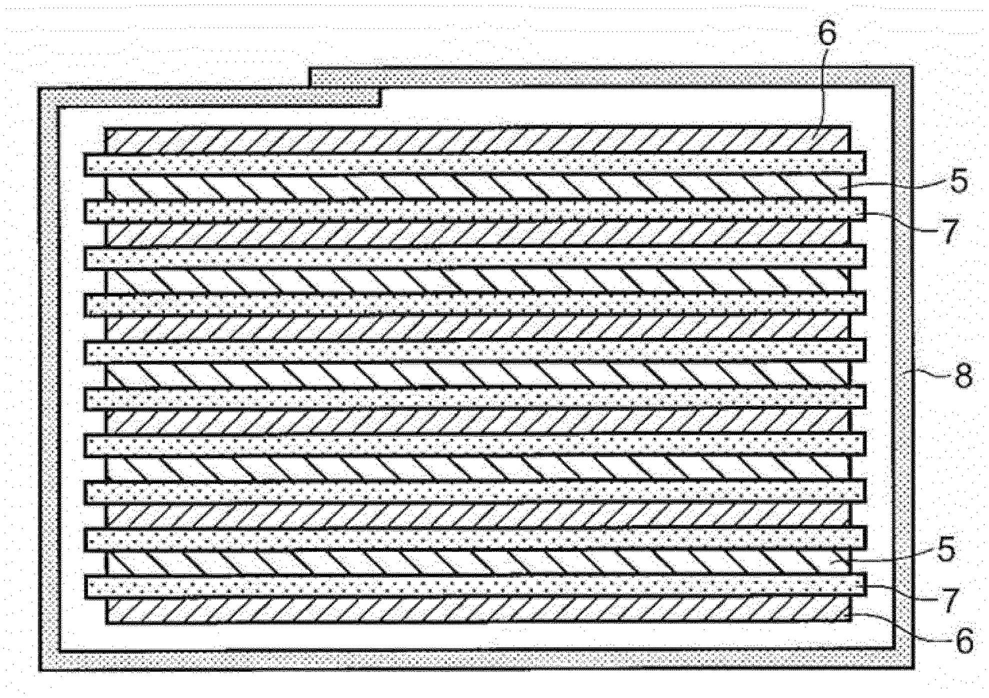

FIG.3

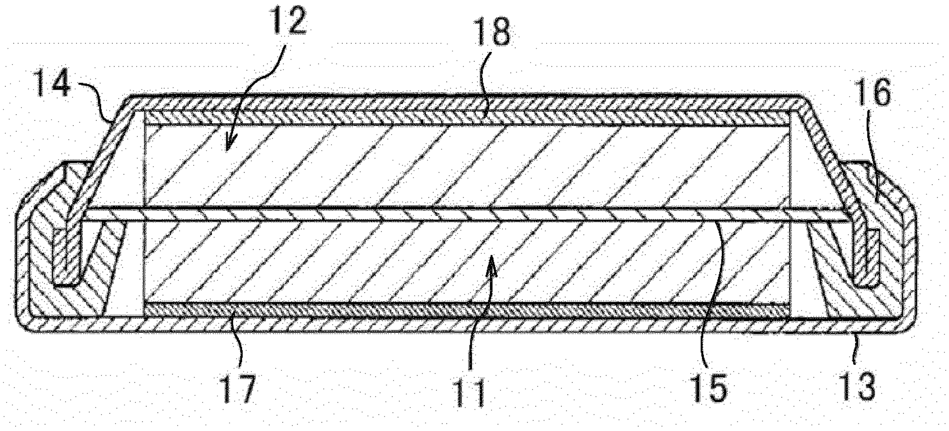

**INTERNATIONAL SEARCH REPORT**

International application No.
**PCT/JP2022/021609**

**A. CLASSIFICATION OF SUBJECT MATTER**

***H01M 10/052***(2010.01)i; ***H01M 10/0567***(2010.01)i; ***H01M 10/058***(2010.01)i
FI: H01M10/0567; H01M10/052; H01M10/058

According to International Patent Classification (IPC) or to both national classification and IPC

**B. FIELDS SEARCHED**

Minimum documentation searched (classification system followed by classification symbols)

H01M10/052; H01M10/0567; H01M10/058

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2020-13881 A (ASAHI KASEI CORP.) 23 January 2020 (2020-01-23)<br>claims, paragraphs [0017], [0138], [0233], examples 27-29 | 1-11 |
| A | CN 105826604 A (SAMSUNG SDI CO., LTD.) 03 August 2016 (2016-08-03)<br>claims, examples | 1-11 |
| A | JP 2016-45987 A (HITACHI, LTD.) 04 April 2016 (2016-04-04)<br>claims, examples | 1-11 |
| A | JP 2014-170689 A (MITSUI CHEMICALS, INC.) 18 September 2014 (2014-09-18)<br>claims, examples | 1-11 |
| A | CN 112271337 A (SHENZHEN CAPCHEM TECHNOLOGY CO., LTD.) 26 January 2021 (2021-01-26)<br>claims, examples | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **19 July 2022** | **02 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/021609**

| Patent document cited in search report | Publication date (day/month/year) | Patent family member(s) | Publication date (day/month/year) |
|---|---|---|---|
| JP 2020-13881 A | 23 January 2020 | (Family: none) | |
| CN 105826604 A | 03 August 2016 | US 2016/0218392 A1<br>claims, examples<br>KR 10-2016-0091077 A | |
| JP 2016-45987 A | 04 April 2016 | (Family: none) | |
| JP 2014-170689 A | 18 September 2014 | (Family: none) | |
| CN 112271337 A | 26 January 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001307768 A
- JP 2009003799 A
- JP 2018156761 A
- JP 2021094572 A